# EUROPÄISCHE PATENTSCHRIFT

(11) **EP 0 987 464 B1**
(45) Veröffentlichungstag und Bekanntmachung des Hinweises auf die Patenterteilung: **30.10.2002**
(21) Anmeldenummer: 98117425.3
(22) Anmeldetag: 15.09.1998
(51) Int. Cl.: F16D 69/02

(54) **Bremseinheit aus Bremsscheibe und Bremsbelag**
Brake element consisting of a brake disc and a brake lining
Elément de freinage constitué d'un disque de frein et d'une garniture de friction

(43) Veröffentlichungstag der Anmeldung: 22.03.2000
(73) Patentinhaber: DaimlerChrysler AG, 70567 Stuttgart (DE)
(72) Erfinder: Gross, Gerhard, 73560 Böbingen (DE); Haug, Tilmann Dr., 88690 Uhldingen-Mühlhofen (DE); Näumann, Emil, 73061 Ebersbach (DE); Rebstock, Kolja, 89073 Ulm (DE); Scheydecker, Michael, 89278 Nersingen (DE)

(56) Entgegenhaltungen:
- WO-A-97/43560
- DE-C- 19 711 829
- DE-U- 29 804 229

## Beschreibung

Die Erfindung betrifft eine Bremseinheit umfassend eine Bremsscheibe aus thermisch hochbelastbarem Material und einen mit ihr tribologisch zusammenarbeitenden Bremsbelag.

Eine neue Generation von Bremsscheiben besteht aus thermisch hochbelastbarem Material. Dazu gehören Keramik-Werkstoffe, insbesondere kurzfaserverstärkte C/SiC-Keramikwerkstoffe, wie sie in der deutschen Patentanmeldung 197 11 829.1 beschrieben sind. Eine weitere gattungsgemäße Bremsscheibe ist aus der DE 43 22 113 bekannt. Dabei handelt es sich um eine Bremsscheibe mit einem Tragkörper aus einem Stahl-, Gußeisen- oder Aluminiumwerkstoff, auf deren außenseitige Ringabschnitte je eine ringförmige Schicht aus einem thermisch hochbelastbaren Material, nämlich einem Keramikwerkstoff bzw. einem Metall-, Metallsinter- oder Metallkeramiksinterwerkstoff aufgebracht sind. Dieses Material ist temperaturbeständig bis über 1500° Celsius. Um zu verhindern, dass bei Bremsmanövern die Bremsscheibe so stark erhitzt, dass der Bremsbelag Schaden nimmt, ist vorgesehen, dass das Keramikmaterial eine wärmeleitende Metallfüllung hat, die die Wärme an den metallenen Tragkörper abgibt und dass die Bremsscheibe als innenbelüftete Bremsscheibe konstruiert ist.

Problematisch ist die Kombination derartiger Bremsscheiben mit einem geeigneten Bremsbelag. Ein gebräuchlicher anorganischer Bremsbelag ist z.B. in der DE 43 06 721 offenbart. Derartige Bremsbeläge sind jedoch nicht stabil genug.

In dem deutschen Gebrauchsmuster DE 298 04 229 U1 ist ein gesinterter Bremsbelag für eine kurzfaserverstärkte C/SiC-Bremsscheibe beschrieben, der aus Metallpulver, primärem Kohlenstoff und ggf. Additiven besteht. Dieser Bremsbelag zeichnet sich dadurch aus, dass Kohlenstoffpulver, Metallpulver und gegebenenfalls Bindemittel mit einander vermischt werden und gesintert werden. Dabei kommt es zu einer Reaktionsbindung zwischen dem Kohlenstoff und dem Metall, wobei keramische Phasen gebildet werden, die letztlich eine bindende Matrix bilden. Hierdurch entsteht ein sehr harter Reibbelag, der nicht für alle Bremsanwendungen optimale Eigenschaften zeigt.

Aufgabe der Erfindung ist es, eine Bremseinheit der oben genannten Art bereit zu stellen, die über höhere Temperaturbereiche stabil ist, aber einfacher herzustellen ist und ein gutes Komfortverhalten aufweist.

Die Lösung besteht in einer Bremseinheit mit den Merkmalen des Anspruchs 1.

Erfindungsgemäß ist also.vorgesehen, dass der Bremsbelag aus einem Metall-Keramik-Werkstoff oder einem Serien-Sintermetallbelag besteht.

Sintermetallbeläge wurden bisher nur in Nutzfahrzeugen oder bei der Bahn verwendet. Für den PKW-Bereich eigneten sie sich in Verbindung mit der bisher üblichen Grauguß-Bremsscheiben nicht, da das Komfortverhalten (Rubbeln, Quietschen, Stottern) nicht ausreichend ist. Es hat sich nun überraschenderweise und für den Fachmann unerwartet herausgestellt, dass die bisher üblichen Unzuträglichkeiten bei der Paarung von gängigen Grauguß-Bremsscheiben mit Sintermetall-Bremsbelägen bei der Verwendung von Keramik-Bremsscheiben nicht auftreten. Bei der Kombination einer Keramik-Bremsscheibe mit einem Sintermetallbelag hat es sich ferner herausgestellt, dass sehr gute Reibbeiwerte von 0,3 bis 0,5 und eine Temperaturbeständigkeit bis 900 bis 1000°C erreichbar sind.

Dasselbe gilt für die Verwendung von Bremsbelägen mit einer mindestens teilweise keramischen Bindephase. Bei Temperaturen unter 1200° Celsius entsteht während der Wärmebehandlung eine nur teilweise umgewandelte Bindephase mit einem anorganischen und einem organischen Bestandteil, abhängig von den verwendeten Polymeren.

Die erfindungsgemäße Bremseinheit ist eine optimale Kombination hinsichtlich einer erhöhten thermischen Belastbarkeit auf Seiten der Keramik-Bremsscheibe im Hinblick auf eine zumutbare Standzeit des Bremsbelages sowie auf sonstige tribologische Anforderungen wie Reibbeiwerthöhe oder Temperaturabhängigkeit des Reibwertes. Die erfindungsgemäße Bremseinheit ist aufgrund ihrer stofflichen Beschaffenheit thermisch höher belastbar und auch verschleißresistenter als konventionelle Bremseinheiten.

Die keramische Bindephase ensteht vorzugsweise durch Pyrolyse mindestens eines präkeramischen Polymeres. Bspw. können konventionelle Belagmischungen für organisch gebundene PKW-Serienbeläge zum Einsatz kommen, wobei der herkömmliche organische Binder durch ein präkeramisches Polymer ersetzt ist. Die Zusammensetzung dieser konventionellen Serienbeläge ist dem Fachmann wohlbekannt. Dabei kann es sich um einen C-Precursor wie z.B. Vinylharze oder um siliziumhaltige Polymere handeln. Die Bindephase kann durch ein sogenanntes Polymer-Pyrolyse-Verfahren (PP-Verfahren) eingebracht und hergestellt werden. Die einzelnen Komponenten werden gemischt und gepresst und bei Temperaturen bis zu 1200° Celsius ca. 60 Minuten pyrolisiert und ggf. endbearbeitet. Die aus Belagmischung und Binder resultierende keramische Bindephase ist meist amorph, d.h. glasartig. Sie ist temperaturbeständig, je nach Typ bis zu 1600° Celsius.

Der Metallanteil des Bremsbelages ist z.B. aus der Gruppe bestehend aus Kupfer und Kupferlegierungen sowie Eisen und Eisenlegierungen ausgewählt. Die Metalle werden in Form von Spänen, Metallwolle oder Metallpulver als Einbettphase eingesetzt. Vorteihafterweise sind im Reibbelag ferner Kohlenstoff, Koks oder Graphit, feste Schmiermittel wie z.B. SbS₃, MoS₂, CaF₂ und Füllstoffe, z.B. aus Keramik, Aluminiumoxid, Glas, Glimmermehl, Schwerspat und/oder Eisenoxid enthalten die als Putzmittel dienen.

Die Bremsscheibe besteht in vorteilhafter Weise aus einem keramischen Werkstoff, insbesondere Oxidkeramik oder faserverstärkter Keramik, wie C/C-Keramik, SiC/SiC-Keramik oder C/SiC-Keramik. Es ist bevorzugt, dass die Fasern isotrop orientiert sind, da dadurch eine gleichmäßig hohe Wärmeleitfähigkeit auch im Querschnitt der Bremsscheibe erzielt wird. Dadurch wird die Oberflächentemperatur im Belastungsfall abgesenkt.

Im Folgenden wird ein Ausführungsbeispiel der vorliegenden Erfindung anhand der beigefügten Zeichnungen näher beschrieben. Es zeigen:
- Figur 1: ein lichtmikroskopisches Gefügebild einer erfindungsgemäßen Bremsscheibe mit hoher Wärmeleitfähigkeit;

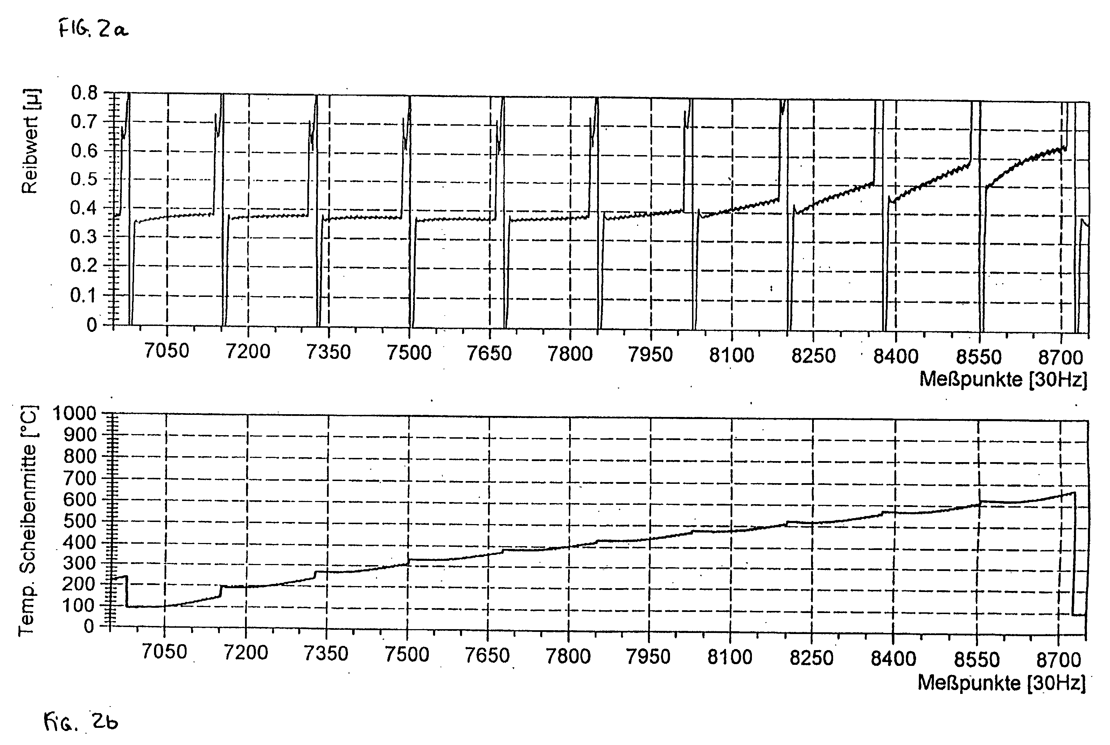

- Figuren 2a, b: Ergebnisse eines Bremsversuchs mit einer Bremsscheibe gemäß Figur 1 und einem Bremsbelag mit anorganisch gebundener Matrix;
- Figuren 3a, b: Ergebnisse eines weiteren Bremsversuchs, diesmal mit einem konventionellen Sintermetall-Bremsbelag.

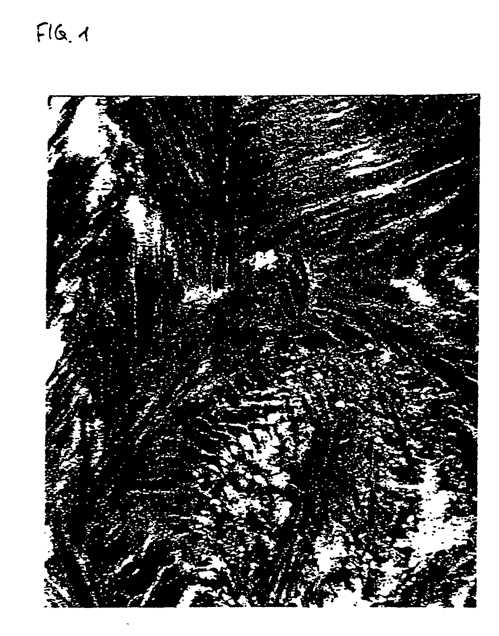

Die in Figur 1 gezeigte Bremsscheibe besteht aus ca. 35-45 Vol.-% Fasern, ca. 40-50 Vol.-% Siliziumcarbid und max. ca. 15 Vol.-% Silizium. Bei der Herstellung (vgl. die deutsche Patentanmeldung 197 11 829.1) wurde darauf geachtet, dass die Ausgangssubstanzen möglichst homogen gemischt wurden. Dadurch erhielt man isotrop orientierte Fasern und nur wenige, kleine Poren, in denen sich bei der Flüssigsilizierung reines Silizium sammeln kann (vgl. DE 197 11 829.1, auf die hiermit Bezug genommen ist). Die isotrope Faseranordnung und die Verkleinerung der Poren bis gegen Null erhöhen die Wärmeleitfähigkeit der resultierenden Keramik. Zur Herstellung der Bremsbeläge wurde eine Mischung aus Metallen und Putzmitteln nach und nach mit Graphit vermischt und homogenisiert. Anschließend wurde das Polysiloxan zugefügt. Die Mischung wurde warmgepresst gesintert und pyrolysiert. Bei einer Verwendung anderer präkeramischer Polymere muss der Pressling unter Schutzgas pyrolysiert werden. Der fertige Belag wird ggf. noch endbearbeitet. Er enthält eine zumindest teilweise keramische Bindephase. Der Grad der Keramisierung beeinflusst das Komfortverhalten. Eine nicht vollständige Keramisierung, z.B. zwischen 20 und 80 %, insbesondere zwischen 40 und 60%, ist erforderlich. Zweckmäßig kann es sein, auf die Pyrolyse zu verzichten und den Pressling direkt als Bremsbelag einzusetzen. Die sich beim Bremsmanövern entwickelnde Reibungshitze bewirkt, dass die Pyrolyse während des Einfahrens stattfindet.

In den Bremsversuchen wurde eine C/SiC-Bremsscheibe mit 285 mm Durchmesser mit einem Bremsbelag aus Metall und 5-15 Gew.-% Polysiloxan H62C der Firma Wacker als präkeramische Bindephase verwendet. Der Metallzuschlag enthält 2/3 Stahlwolle und 1/3 Kupferpulver. 1/2 Gew.-% Al₂O₃ dienten als Putzmittel. Als festes Schmiermittel waren max. 5 Gew.-% Molybdänsulfid und/oder Calciumfluorid und/oder Graphit zugefügt. Der Bremsdruck betrug 15 bar bei einer Geschwindigkeit von 60-200 km/h.

Die gemessenen Reibwerte lagen zwischen 0,35 und 0,55. Die Temperatur in der Scheibenmitte stieg auf über 600°C. Das liegt daran, dass zwischen den einzelnen Bremszyklen nicht bis zur vollständigen Abkühlung der Versuchsanordnung gewartet wurde. In der Praxis werden diese Temperaturen aber nicht erreicht. Der gemessene Verschleiß betrug bei der Bremsscheibe. 0,2-0,3 mm und beim Bremsbelag ca 1-1,5 g.

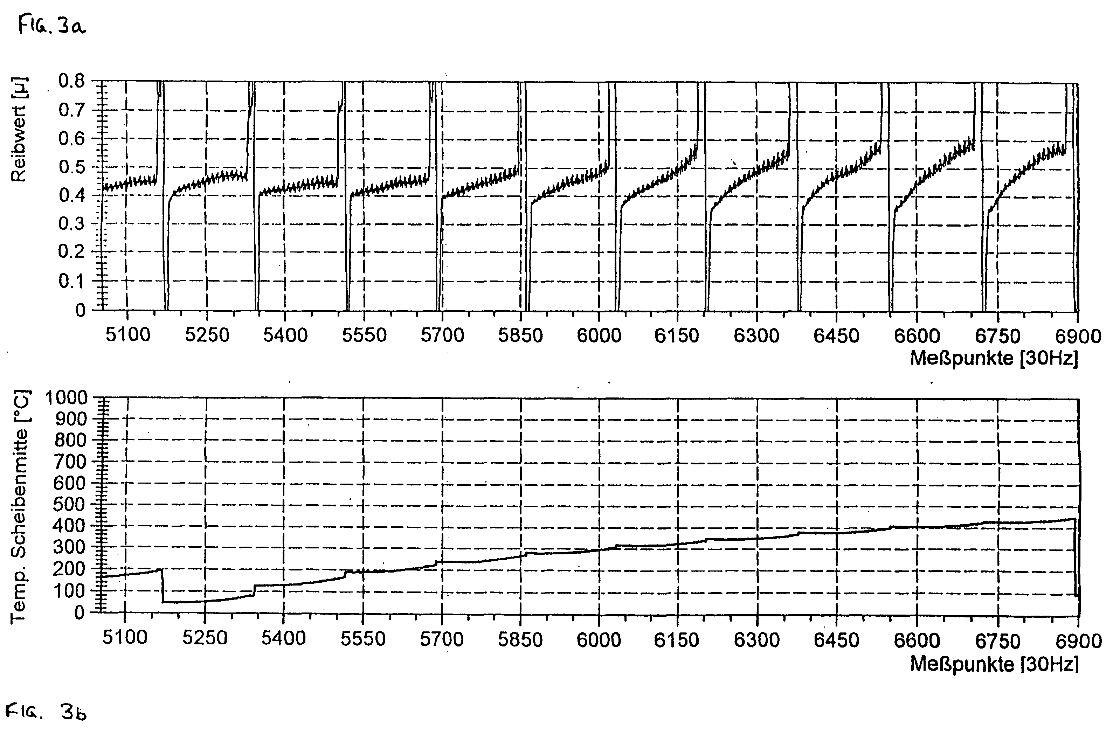

In den Figuren 3a und 3b sind die Ergebnisse eines entsprechenden Bremsversuches unter Verwendung eines konventionellen Sintermetall-Bremsbelages dargestellt. Dabei handelt es sich um einen konventionellen Bremsbelag, der wegen seines schlechten Komfortverhaltens bisher nur in Verbindung mit herkömmlichen Grauguß-Bremsscheiben in Nutzfahrzeugen und bei der Bahn Verwendung fand. Die gemessenen Reibwerte lagen zwischen 0,4 und 0,6. Die Änderung des Kurvenverlaufs illustriert das "Einlaufverhalten" bedingt durch die Mikrorauhigkeit des Bremsbelages auf der Scheibe. Die Temperatur in der Scheibenmitte blieb unter 500°C.

Die bei den Versuchen verwendete Bremsscheibe aus kurzfaserverstärkten C/SiC-Keramik wies eine gute Wärmeleitfähigkeit auf. Dies trug dazu bei, dass die Temperaturen nicht übermäßig austragen.

## Patentansprüche

1. Bremseinheit umfassend eine Bremsscheibe aus einem thermisch hochbelastbarem Material und einen mit ihr tribologisch zusammenarbeitenden Bremsbelag, wobei der Bremsbelag einen anorganisch gebundenen Werkstoff mit einer keramischen Binderphase und Metallpartikeln enthält
**dadurch gekennzeichnet,**
• **dass** die keramische Bindephase durch teilweise Pyrolyse mindestens eines präkeramischen Polymers erhältlich ist, wobei
• die teilweise Pyrolyse des Polymers zwischen 20 % und 80 % beträgt.

2. Bremseinheit nach Anspruch 1, **dadurch gekennzeichnet, dass** die keramische Bindephase durch teilweise Umwandlung des präkeramischen Polymers während des Betriebs der Bremseinheit erhältlich ist.

3. Bremseinheit nach Anspruch 1 oder 2, **dadurch gekennzeichnet, dass** das mindestens eine präkeramische Polymer aus der Gruppe bestehend aus C-Precursoren wie z.B. Vinylharzen und/oder präkeramischen Polymeren auf Siliziumbasis wie z.B. Polysilanen, Polysiloxanen, Polysilazanen, Polyborocarbosilanen, Polyborosilazanen, Polyborosilanen, Polycarbosilazanen und Polycarbosilanen ausgewählt ist.

4. Bremseinheit nach einem der vorhergehenden Ansprüche, **dadurch gekennzeichnet, dass** der Bremsbelag ferner anorganische Schmierstoffe enthält.

5. Bremseinheit nach einem der vorhergehenden Ansprüche, **dadurch gekennzeichnet, dass** die Metallpartikel aus der Gruppe bestehend aus Kupfer und Kupferlegierungen wie Bronze oder Messing sowie Eisen und Eisenlegierungen wie Grauguß oder Stahl ausgewählt sind.

6. Bremseinheit nach einem vorhergehenden Ansprüche, **dadurch gekennzeichnet, dass** die Metallpartikel in Form von Spänen und/oder von Metallwolle und/oder in Pulverform zugesetzt sind.

7. Bremseinheit nach einem der vorhergehenden Ansprüche, **dadurch gekennzeichnet, dass** im Bremsbelag ferner Kohlenstoff vorzugsweise in Faserform enthalten ist.

8. Bremseinheit nach einem der vorhergehenden Ansprüche, **dadurch gekennzeichnet, dass** im Bremsbelag als feste Schmiermittel Calciumfluorid, Graphit und/oder Sulfide, insbesondere Molybdänsulfid oder Antimonsulfid enthalten sind.

9. Bremseinheit nach einem der vorhergehenden Ansprüche, **dadurch gekennzeichnet, dass** im Bremsbelag ferner Hartpartikel aus Keramik, vorzugsweise aus Carbiden wie Borcarbid, Siliziumcarbid, Titancarbid und/oder Metallcarbide enthalten sind.

10. Bremseinheit nach einem der vorhergehenden Ansprüche, **dadurch gekennzeichnet, dass** im Bremsbelag Hartpartikel aus Aluminiumoxid und/oder Glas enthalten sind.

11. Bremseinheit nach einem der vorhergehenden Ansprüche, **dadurch gekennzeichnet, dass** die Bremsscheibe aus Keramik, insbesondere Oxidkeramik, C/SiC-Werkstoff, C/C-SiC-Werkstoff, SiC/SiC-Werkstoff oder aus C/C-Werkstoff besteht.

12. Bremseinheit nach Anspruch 11, **dadurch gekennzeichnet dass** die Fasern der faserverstärkten Verbundkeramik im Wesentlichen isotrop orientiert sind.

13. Bremseinheit nach einem der vorhergehenden Ansprüche, **dadurch gekennzeichnet, dass** die Bremsscheibe aus einer kurzfaserverstärkten C/SiC-Verbundkeramik besteht, vorzugsweise mit ca. 35-45 Vol.-% Kohlenstofffasern, ca. 40-50 Vol.-% Siliziumcarbid und max. ca. 15 Vol.-% Silizium.

## Claims

1. Brake unit comprising a friction disk made of a material which can withstand a high thermal load, and a brake liner which functions tribologically in conjunction with it, whereby the brake liner contains an inorganically bound material with a ceramic binding phase and metal particles,
**characterized in that**
• the ceramic binding phase can be obtained by partial pyrolysis of at least one pre-ceramic polymer, whereby
• the extent of partial pyrolysis of the polymer is between 20% and 80%.

2. Brake unit in accordance with claim 1, **characterized in that** the ceramic binding phase can be obtained by partial transformation of the pre-ceramic polymer during operation of the brake unit.

3. Brake unit in accordance with claim 1 or 2, **characterized in that** at least one pre-ceramic polymer is selected from the group comprising C-precursors such as, for example, vinyl resins and/or pre-ceramic polymers on a silicon base such as, for example, polysilanes, polysiloxanes, polysilazanes, polyborocarbosilanes, polyborosilazanes, polyborosilanes, polycarbosilazanes and polycarbosilanes.

4. Brake unit in accordance with one of the preceding claims, **characterized in that** the brake lining further contains inorganic lubricants.

5. Brake unit in accordance with one of the preceding claims, **characterized in that** the metal particles are selected from the group comprising copper and copper alloys such as bronze or brass and also iron and iron alloys such as grey cast iron and/or steel.

6. Brake unit in accordance with one of the preceding claims, **characterized in that** the metal particles are added in the form of chips and/or metal wool and/or in powder form.

7. Brake unit in accordance with one of the preceding claims, **characterized in that** carbon, preferably in the form of fibres, is further contained in the brake lining.

8. Brake unit in accordance with one of the preceding claims, **characterized in that** calcium fluoride, graphite and/or sulphide, particularly molybdenum sulphide or antimony sulphide, are contained in the brake lining as solid lubricants.

9. Brake unit in accordance with one of the preceding claims, **characterized in that** hard particles of ceramics, preferably of a carbide such as boron carbide, silicon carbide, titanium carbide and/or metal carbides, are further contained in the brake lining.

10. Brake unit in accordance with one of the preceding claims, **characterized in that** hard particles made of aluminium oxide and/or glass are contained in the brake lining.

11. Brake unit in accordance with one of the preceding claims, **characterized in that** the friction disk is ceramic, particularly oxide ceramics, C/SiC material, C/C-SiC material, SiC/SiC material or C/C material.

12. Brake unit in accordance with claim 11, **characterized in that** the fibres of the fibre-reinforced composite ceramic material are essentially isotropically orientated.

13. Brake unit in accordance with one of the preceding claims, **characterized in that** the friction disk is made of C/SiC composite ceramic material which is reinforced by short fibres, preferably with approx. 35-45% volume carbon fibres, approx. 40-50% volume silicon carbide and a maximum of approximately 15% volume silicon.

## Revendications

1. Unité de frein comprenant un disque de frein formé d'un matériau pouvant être soumis à une contrainte thermique élevée et une garniture de frein qui coopère de façon tribologique avec le disque de frein, la garniture de frein contenant un matériau lié de façon minérale et comportant une phase céramique formant liant et des particules métalliques, **caractérisée en ce**
- **que** la phase de liant céramique peut être obtenue au moyen d'une pyrolyse partielle au moins d'un polymère précéramique,
- la pyrolyse partielle du polymère s'effectuant en un pourcentage compris entre 20 % et 80 %.

2. Unité de frein selon la revendication 1, **caractérisée en ce que** la phase de liant céramique peut être obtenue par conversion partielle du polymère précéramique pendant le fonctionnement de l'unité de frein.

3. Unité de frein selon la revendication 1 ou 2, **caractérisée en ce que** le au moins un polymère précéramique est choisi dans le groupe constitué par des précurseurs C, comme par exemple des résines vinyliques et/ou des polymères précéramiques à base de silicium, comme par exemple des polysilanes, des polysiloxanes, des polyxylazanes, des polyborocarbosilanes, des polyborosilazanes, des polyborosilanes, des polycarbosilazanes et des polycarbosilanes.

4. Unité de frein selon l'une des revendications précédentes, **caractérisée en ce que** la garniture de frein contient en outre des lubrifiants minéraux.

5. Unité de frein selon l'une des revendications précédentes, **caractérisée en ce que** les particules métalliques sont choisies dans le groupe comprenant le cuivre et les alliages de cuivre, comme par exemple du bronze ou du laiton, ainsi que le fer et des alliages de fer, comme par exemple la fonte et l'acier.

6. Unité de frein selon l'une des revendications précédentes, **caractérisée en, ce que** les particules métalliques sont ajoutées sous la forme de copeaux et/ou sous la forme de laine métallique et/ou sous la forme de poudre.

7. Unité de frein selon l'une des revendications précédentes, **caractérisée en ce que** du carbone est en outre contenu, de préférence sous forme de fibres, dans la garniture de frein.

8. Unité de frein selon l'une des revendications précédentes, **caractérisée en ce que** la garniture de frein contient, comme lubrifiants solides, du fluorure de calcium et du graphite et/ou du sulfure, notamment du sulfure de molybdène ou du sulfure d'antimoine.

9. Unité de frein selon l'une des revendications précédentes, **caractérisée en ce que** la garniture de frein contient en outre des particules dures formées d'une céramique, de préférence formée de carbures telles que du carbure de bore, du carbure de silicium ou du carbure de titane et/ou des carbures métalliques.

10. Unité de frein selon l'une des revendications précédentes, **caractérisée en ce que** la garniture de frein contient des particules dures formées d'oxyde d'aluminium et/ou de verre.

11. Unité de frein selon l'une des revendications précédentes, **caractérisée en ce que** le disque de frein est constitué par une céramique, notamment un oxyde céramique, un matériau C/SiC, un matériau C/C-SiC, un matériau SiC-SiC ou un matériau C/C.

12. Unité de frein selon la revendication 11, **caractérisée en ce que** les fibres de la céramique composite renforcée par des fibres sont orientées d'une manière essentiellement isotrope.

13. Unité de frein selon l'une des revendications précédentes, **caractérisée en ce que** le disque de frein est constitué par une céramique composite C/SiC renforcée par des fibres courtes et contenant de préférence entre 30-40 % en volume de fibres de carbone, environ 40-50 % en volume de carbure de silicium et au maximum environ 15 % en volume de silicium.
